# EUROPÄISCHE PATENTANMELDUNG

(11) **EP 1 393 999 A2**
(43) Veröffentlichungstag der Anmeldung: **03.03.2004**
(21) Anmeldenummer: 03018443.6
(22) Anmeldetag: 14.08.2003
(51) Int. Cl.: B60R 21/34, B62D 25/12

(54) **Anordnung einer Frontklappe an einem Fahrzeug**

(30) Priorität: 29.08.2002 DE 10239880
(71) Anmelder: Bayerische Motoren Werke Aktiengesellschaft, 80809 München (DE)
(72) Erfinder: Köstler, Ulrich, 85241 Hebertshausen (DE); Dirndorfer, Albin, Dr., 85375 Neufahrn (DE); Korkusuz, Haci, 81671 München (DE); Tietel, Andreas, 81375 München (DE); Mayr, Jürgen, 80807 München (DE); Theil, Christoph, 80637 München (DE)

(57) **Zusammenfassung**

Eine Anordnung einer Frontklappe an einem Fahrzeug weist zumindest eine - in Fahrtrichtung gesehen - hinten liegende Scharniereinrichtung auf, um die die Frontklappe zum normalen Öffnen und Schließen verschwenkbar ist. In der geschlossenen Stellung verriegelt zumindest ein vorne liegendes Klappenschloss die Frontklappe. Das Klappenschloss ist dabei direkt oder indirekt mit der Karosserie des Fahrzeugs verbunden, während ein dem Klappenschloss gegenüberliegender Schließbügel über ein Halteelement an der Frontklappe angebracht ist. Bei einer von einer Sensoreinrichtung detektierten Kollision des Fahrzeugs mit einem Fußgänger oder Radfahrer wird die Frontklappe über zumindest eine Anhebevorrichtung gegenüber der geschlossenen Stellung im hinteren Bereich angehoben. Der Schließbügel ist drehbar um eine Achse in Fahrzeugquerrichtung am Halteelement angelenkt, sodass beim Anheben der Frontklappe im hinteren Bereich sich das Klappenschloss nicht mit dem Schließbügel verklemmen kann.

## Beschreibung

Die Erfindung betrifft eine Anordnung einer Frontklappe an einem Fahrzeug gemäß des Oberbegriffs des Patentanspruchs 1.

Um bei einer Kollision eines Fußgängers oder Radfahrers mit einem Kraftfahrzeug das Ausmaß von Verletzungen, insbesondere im Brust- und Kopfbereich, zu minimieren, ist es allgemein bekannt, die Frontklappe im hinteren Bereich anzuheben. Hierdurch wird ein so großer Abstand der Frontklappe zu einer steifen Unterstruktur des Fahrzeugs (Motor, Federbeinaufnahmen, etc.) erreicht, dass ein ausreichender Deformationsweg zur Verfügung steht, um den Aufprall des Fußgängers oder Radfahrers auf ein verträgliches Maß zu verzögern.

Aus der DE 299 14 145 U1 ist ein U-förmiger Schließbügel für ein Drehfallenschloss bekannt, der anschlagbegrenzt schwenkbar um seinen Befestigungsabschnitt an einer Grundplatte gehalten ist. Der Schließbügel wird dabei von einem elastischen Element in einer zwischen den Anschlagstellungen liegenden Mittelstellung gehalten. So können auch größere Einbautoleranzen zwischen der Drehfalle und dem Schließbügel kompensiert werden.

Aufgabe der Erfindung ist es, eine Anordnung einer Frontklappe an einem Fahrzeug zu schaffen, bei der einerseits ein Fußgänger oder ein Radfahrer bei einer Kollision geschützt ist, andererseits aber die Frontklappe sich normal öffnen und schließen lässt.

Diese Aufgabe wird durch die Merkmale des Patentanspruchs 1 gelöst.

Erfindungsgemäß weist eine Anordnung einer Frontklappe an einem Fahrzeug zumindest eine - in Fahrtrichtung gesehen - hinten liegende Scharniereinrichtung auf, um die die Frontklappe zum normalen Öffnen und Schließen verschwenkbar ist. In der geschlossenen Stellung verriegelt zumindest ein vorne liegendes Klappenschloss die Frontklappe. Das Klappenschloss ist dabei direkt oder indirekt mit der Karosserie des Fahrzeugs verbunden, während ein dem Klappenschloss gegenüberliegender Schließbügel über ein Halteelement an der Frontklappe angebracht ist. Bei einer von einer Sensoreinrichtung detektierten Kollision des Fahrzeugs mit einem Fußgänger oder Radfahrer wird die Frontklappe über zumindest eine Anhebevorrichtung gegenüber der geschlossenen Stellung im hinteren Bereich angehoben. Der Schließbügel ist drehbar um eine Achse in Fahrzeugquerrichtung am Halteelement angelenkt, sodass beim Anheben der Frontklappe im hinteren Bereich sich das Klappenschloss nicht mit dem Schließbügel verklemmen kann. Analog dazu ist es natürlich auch möglich, dass das Klappenschloss an der Frontklappe angebracht ist, und der drehbare Schließbügel an der Karosserie angebunden ist.

Durch das Anheben der Frontklappe im hinteren Bereich dreht sich die Frontklappe leicht, da sie vorne nach wie vor im Klappenschloss gehalten ist. Das Klappenschloss muss diese Drehung ermöglichen, da ansonsten beim Anheben der Frontklappe entweder das Klappenschloss beschädigt wird, oder aber das Anheben der Frontklappe behindert wird, weil sich der Schließbügel im Klappenschloss verkeilt. Durch die erfindungsgemäße Anordnung mit einem Schließbügel, der gegenüber dem Halteelement verschwenkt werden kann, ist auf besonders einfache Weise eine Drehung der Frontklappe beim Anheben möglich. Diese elegante Lösung ist aufgrund der einfachen Gestaltung solide und preiswert. Dennoch kann das Klappenschloss die Frontklappe auch seitlich führen.

Günstigerweise wird der Schließbügel durch zumindest eine Feder in einer Mittelstellung gehalten, wenn keine weitere Kraft auf den Schließbügel einwirkt. Beim Schließen der Frontklappe muss der Schließbügel eine relativ genaue Position haben, um sicher das Klappenschloss so zu treffen, dass er darin verriegelt. Durch eine Feder wird daher der Schließbügel in einer Mittelstellung in seinem möglichen Verschwenkbereich gehalten.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die Figuren zeigen in schematischer Darstellungsweise:
- **Fig. 1**: eine Prinzipdarstellung einer Frontklappe in einer geschlossenen und in einer hinten angehobenen Stellung in einer Seitenansicht,
- **Fig. 2**: eine perspektivische Ansicht eines Schließbügels, der an einem Halteelement angelenkt ist, und
- **Fig. 3**: eine Seitenansicht des Schließbügels von **Fig. 2**.

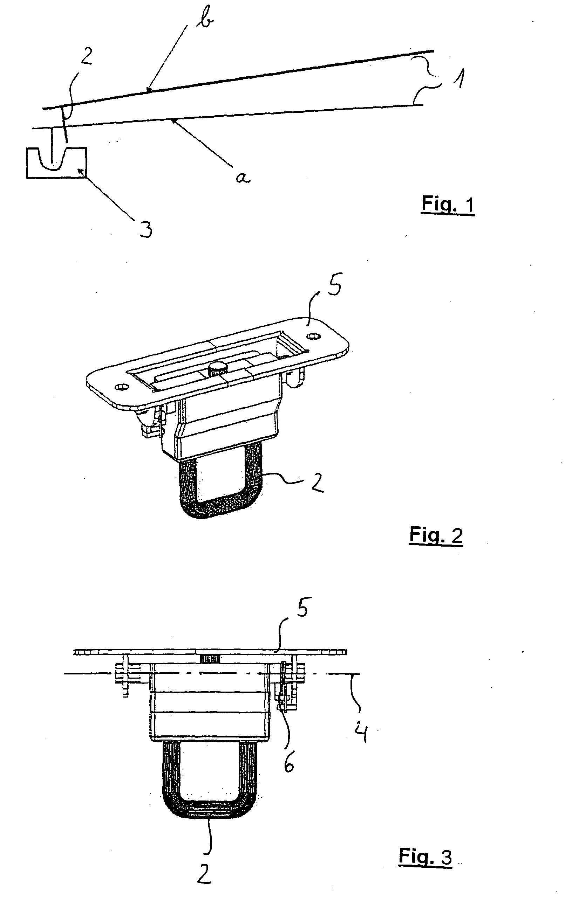

**Fig. 1** zeigt eine Frontklappe 1 in einer geschlossenen Stellung a. An der Frontklappe 1 ist - in Fahrtrichtung gesehen vorne - ein Fanghaken 2 angebracht, der in einer Drehfalle 3 verriegelt ist. Wenn nun eine Sensoreinrichtung eine Kollision des Fahrzeugs mit einem Fußgänger oder Radfahrer detektiert, wird die Frontklappe 1 über eine Anhebevorrichtung im hinteren Bereich angehoben. In dieser angehobenen Stellung b kann die Frontklappe 1 nach unten deformiert werden, und so den Aufprall des Fußgängers oder Radfahrers abfangen. Beim Anheben der Frontklappe 1 würde ein starr an die Frontklappe 1 angebundener Fanghaken 2 sich - wie dargestellt - in der Drehfalle 3 verkeilen, und so das Anheben der Frontklappe 1 zumindest behindern.

Um dieses Verkeilen des Fanghakens 2 in der Drehfalle 3 zu verhindern, ist - wie in **Fig. 2** und **Fig. 3** gezeigt - der eigentliche U-förmige Fanghaken 2 um eine in Fahrzeugquerrichtung verlaufende Schwenkachse 4 drehbar an einem Halteelement 5 angelenkt, das mit der Frontklappe 1 verbunden ist. Dadurch kann der Fanghaken 2 beim Anheben der Frontklappe 1 leicht nach vorne Verschwenken, sodass er ohne sich zu verklemmen weiterhin in der Drehfalle 3 gehalten werden kann.

Der Fanghaken 2 kann innerhalb eines begrenzten Schwenkbereichs um die Schwenkachse 4 verschwenkt werden. Damit der Fanghaken 2 beim normalen Schließen der Frontklappe 1 sicher die Drehfalle 3 trifft, ist es erforderlich, dass der Fanghaken 2 eine reproduzierbare Stellung einnimmt, wenn keine Kraft auf ihn wirkt. Dazu wird der Fanghaken 2 über eine Feder 6 in einer Mittelstellung gehalten. So ist sichergestellt, dass zusammen mit Einführschrägen an der Drehfalle 3 der Fanghaken 2 immer sicher in der Drehfalle 3 beim Schließen der Frontklappe 1 verriegelt.

## Patentansprüche

1. Anordnung einer Frontklappe an einem Fahrzeug, mit zumindest einer - in Fahrtrichtung gesehen - hinten liegenden Scharniereinrichtung, um die die Frontklappe zum normalen Öffnen und Schließen verschwenkbar ist, mit zumindest einem vorne liegenden Klappenschloss, das die Frontklappe in der geschlossenen Stellung verriegelt, wobei das Klappenschloss mit der Karosserie des Fahrzeugs verbunden ist, während ein dem Klappenschloss gegenüberliegender Schließbügel über ein Halteelement an der Frontklappe angebracht ist, sowie mit zumindest einer Anhebevorrichtung, durch die bei einer von einer Sensoreinrichtung detektierten Kollision des Fahrzeugs mit einem Fußgänger oder Radfahrer die Frontklappe gegenüber der geschlossenen Stellung im hinteren Bereich angehoben wird, **dadurch gekennzeichnet, dass** der Schließbügel drehbar um einer Achse in Fahrzeugquerrichtung am Halteelement angelenkt ist, um das Anheben der Frontklappe nicht zu behindern.

2. Anordnung nach Anspruch 1, **dadurch gekennzeichnet, dass** der Schließbügel durch zumindest eine Feder in einer Mittelstellung gehalten wird, wenn keine weitere Kraft auf den Schließbügel einwirkt.

3. Anordnung nach Anspruch 1 oder 2, **dadurch gekennzeichnet, dass** der Schließbügel U-förmig ausgestaltet ist.

4. Anordnung nach einem der vorhergehenden Ansprüche, **dadurch gekennzeichnet, dass** das Klappenschloss ein Drehfallenschloss ist.
